# EUROPÄISCHE PATENTANMELDUNG

(11) **EP 3 150 847 A1**
(43) Veröffentlichungstag der Anmeldung: **05.04.2017**
(21) Anmeldenummer: 15187509.3
(22) Anmeldetag: 30.09.2015
(51) Int. Cl.: F03D 1/04

(54) **WINDKRAFTMODUL FÜR EINE WINDKRAFTANLAGE**

(71) Anmelder: Anerdgy AG, 8005 Zürich (CH)
(72) Erfinder: KÖHLER, Sven, 8134 Adliswil (CH)
(74) Vertreter: Daub, Thomas

(57) **Zusammenfassung**

Die Erfindung betrifft ein Windkraftmodul (10) mit einem Turbinenbereich (11), mit einem den Turbinenbereich (11) umschließenden Gehäuse (12), das einen sich in Richtung des Turbinenbereichs (11) verjüngenden Strömungsleitungskanal ausbildet, und mit einem Windeinlassbereich (13), in dem das Gehäuse (12) für eine strömungstechnische Kopplung mit zumindest einem weiteren Windkraftmodul (10', 10") vorgesehen ist, sowie eine Windkraftanlage mit solchen Windkraftmodulen (10) und ein Verfahren zu Anordnung der Windkraftmodule (10).

## Beschreibung

### Stand der Technik

Die Erfindung betrifft ein Windkraftmodul für eine Windkraftanlage sowie ein Verfahren zur Anordnung von Windkraftmodulen in einer Windkraftanlage.

Es ist bereits ein Windkraftmodul für eine Windkraftanlage bekannt.

Die Aufgabe der Erfindung besteht insbesondere darin, eine modular aufgebaute Windkraftanlage mit einer verbesserten Effizienz bereitzustellen. Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

### Vorteile der Erfindung

Erfindungsgemäß wird ein Windkraftmodul mit einem Turbinenbereich und mit einem den Turbinenbereich umschließenden Gehäuse, das einen sich in Richtung des Turbinenbereichs verjüngenden Strömungsleitungskanal ausbildet, vorgeschlagen, wobei das Windkraftmodul einen Windeinlassbereich aufweist, in dem das Gehäuse für eine strömungstechnische Kopplung mit zumindest einem weiteren Windkraftmodul vorgesehen ist. Indem das Windkraftmodul für eine strömungstechnische Kopplung mit weiteren, seitlich angeordneten Windkraftmodulen vorgesehen ist, können Verwirbelungen bei seitlicher Anströmung der Windkraftmodule verbessert werden. Dadurch kann insbesondere bei seitlicher Anströmung ein Wirkungsgrad verbessert werden, wodurch eine modular ausgestaltete Windkraftanlage mit einem insgesamt verbesserten Wirkungsgrad bereitgestellt werden kann. Der Wirkungsgrad verbessert sich dabei insbesondere bei einer Kopplung von drei oder mehr Windkraftmodulen. Der Wirkungsgrad der Windkraftanlage ist dabei insbesondere besser als ein Wirkungsgrad eines einzeln positionierten Windkraftmoduls. Unter einem "Windkraftmodul" soll in diesem Zusammenhang ein einzeln montierbares Modul verstanden werden, das zur Erzeugung elektrischer Energie mit Hilfe von Windkraft vorgesehen ist. Unter einer "strömungstechnischen Kopplung" soll in diesem Zusammenhang insbesondere verstanden werden, dass das einzelne Windkraftmodul dazu vorgesehen ist, mit zumindest einem weiteren, parallel angeordneten Windkraftmodul strömungstechnisch gekoppelt zu werden, indem das Gehäuse in dem Windeinlassbereich für eine Querströmung vorgesehen ist. Unter einem "Windeinlassbereich" soll in diesem Zusammenhang insbesondere ein von dem Gehäuse aufgespannter Bereich verstanden werden, der einerseits als Einfangbereich für eine Luftströmung in einer Umgebung und der andererseits für die strömungstechnische Kopplung vorgesehen ist. Unter einem "Turbinenbereich" soll in diesem Zusammenhang weiter ein an den Windeinlassbereich anschließender Bereich verstanden werden, in dem die Luftströmung von den benachbart angeordneten Windkraftmodulen entkoppelt ist, d.h. insbesondere ein Bereich, in dem der Strömungsleitkanal auf allen Seiten von dem Gehäuse begrenzt ist. Unter "sich verjüngend" soll insbesondere verstanden werden, dass der Strömungsleitkanal in dem Turbinenbereich eine Querschnittsfläche aufweist, die kleiner ist als eine Querschnittsfläche einer Windeinlassöffnung. Unter der "Querschnittsfläche der Windeinlassöffnung" soll insbesondere eine für eine Einströmung relevante Querschnittsfläche verstanden werden, insbesondere die Querschnittsfläche, welche das Windkraftmodul in einer Frontansicht aufweist. Unter "vorgesehen" soll insbesondere speziell ausgelegt und/oder ausgestattet verstanden werden.

Vorzugsweise weist das Gehäuse in dem Windeinlassbereich zumindest eine seitliche Winddurchlassöffnung auf, die zur strömungstechnischen Kopplung mit dem zumindest einen weiteren Windkraftmodul vorgesehen ist. Dadurch ist eine einfache Kopplung der Windkraftmodule möglich. Unter einer "Winddurchlassöffnung" soll in diesem Zusammenhang insbesondere eine Gehäuseöffnung verstanden werden, die durch Gehäusekanten aufgespannt ist, welche zur Verbindung mit dem benachbarten Windkraftmodul vorgesehen sind. Unter "aufgespannt" soll in diesem Zusammenhang insbesondere verstanden werden, dass durch die Gehäusekanten eine Querschnittsfläche aufgespannt ist, welche als die Winddurchlassöffnung ausgebildet ist. Unter einer "Querschnittsfläche der Winddurchlassöffnung" soll in diesem Zusammenhang insbesondere eine für eine Querströmung relevante Querschnittsfläche verstanden werden, insbesondere die Querschnittsfläche, welche das Windkraftmodul in einer Seitenansicht aufweist. Unter "zur Verbindung vorgesehen" soll in diesem Zusammenhang insbesondere verstanden werden, dass die Gehäusekante dazu vorgesehen ist, mit einer korrespondierenden Gehäusekante des benachbart angeordneten Windkraftmoduls eine geschlossene Fläche auszubilden, welche dem Windeinlassbereich der Windkraftmodule begrenzt.

In einer Ausgestaltung wird vorgeschlagen, dass das Gehäuse zumindest ein Gehäuseteil aufweist, das den Windeinlassbereich an einer Oberseite und/oder einer Unterseite begrenzt. Dadurch ist der Windeinlassbereich in vertikaler Richtung begrenzt, wodurch eine strömungstechnische Kopplung in horizontaler Richtung benachbart angeordneter Windkraftmodule realisiert werden kann. Unter einer "vertikalen Richtung" soll insbesondere eine Richtung verstanden werden, die senkrecht zu einer Aufstandsfläche des Windkraftmoduls orientiert ist. Unter einer "horizontalen Richtung" soll insbesondere eine Richtung verstanden werden, die parallel zu der Aufstandsfläche und senkrecht zu einer Längserstreckungsrichtung des Windkraftmoduls angeordnet ist. Unter einer "Längserstreckungsrichtung" des Windkraftmoduls soll dabei insbesondere eine Richtung verstanden werden, welche parallel zu einer längsten Kante eines kleinsten geometrischen Quaders verläuft, welcher das Windkraftmodul gerade noch vollständig umschließt. Insbesondere sind entlang der Längserstreckungsrichtung der Windeinlassbereich und der Turbinenbereich hintereinander angeordnet. Je nach Anordnungsmöglichkeiten der Windkraftmodule sind jedoch auch andere Ausgestaltungen möglich. Sind die Windkraftmodule beispielsweise zusätzlich oder alternativ für eine vertikale Stapelung vorgesehen, ist es auch möglich, den Windeinlassbereich entsprechend mit Winddurchlassöffnungen zu versehen.

Weiter wird vorgeschlagen, dass das Windkraftmodul einen Windauslassbereich aufweist, in dem das Gehäuse für eine strömungstechnische Kopplung mit dem zumindest einen weiteren, parallel angeordneten Windkraftmodul vorgesehen ist. Dadurch kann auch in den Windauslassbereich eine Querströmung ermöglicht werden, wodurch die Effizienz weiter erhöht werden kann. Unter einem "Windauslassbereich" soll in diesem Zusammenhang insbesondere ein von dem Gehäuse aufgespannter Bereich verstanden werden, der an den Turbinenbereich anschließt und der für eine Ausleitung der Luftströmung in die Umgebung vorgesehen ist.

Vorzugsweise weist das Gehäuse in dem Windauslassbereich zumindest eine seitliche Winddurchlassöffnung auf, die zur Kopplung mit dem zumindest einen weiteren Windkraftmodul vorgesehen ist. Dadurch kann die Kopplung besonders einfach realisiert werden.

Weiter wird vorgeschlagen, dass das Windkraftmodul eine zumindest im Wesentlichen rechteckige Grundfläche aufweist, die für eine Parallelanordnung mit dem zumindest einen weiteren Windkraftmodul vorgesehen ist. Dadurch ist eine einfache Parallelanordnung der Windkraftmodule entlang einer Gebäudekante möglich. Unter einer Grundfläche soll dabei insbesondere eine Fläche verstanden werden, die das Windkraftmodul in einer Projektion auf die Aufstandsfläche einnimmt. Unter der "Aufstandsfläche" soll insbesondere eine Fläche verstanden werden, die durch Aufstandspunkte des Windkraftmoduls bei einer Montage auf einer Fläche, wie insbesondere einer Dachfläche, definiert ist.

Besonders bevorzugt umfasst das Windkraftmodul eine vordere Windeinlassöffnung, die eine rechteckige Grundform aufweist, und eine hintere Windauslassöffnung, die eine rechteckige Grundform aufweist. Dadurch ist eine Parallelanordnung der Windkraftmodule besonders einfach. Unter einer "Grundform" soll in diesem Zusammenhang insbesondere eine Form der Windeinlassöffnung oder der Windauslassöffnung verstanden werden, welche die Windeinlassöffnung oder die Windauslassöffnung in einer Aufsicht auf das Windkraftmodul aufweisen.

Weiter wird vorgeschlagen, dass der Strömungsleitkanal in dem Turbinenbereich einen zumindest teilweise runden Innenquerschnitt aufweist. Dadurch kann eine hohe Strömungsgeschwindigkeit in dem Turbinenbereich erreicht werden. Gleichzeitig kann ein Turbinenrad verwendet werden, welches eine Rotationsachse aufweist, die parallel zu einer Strömungsrichtung orientiert ist, wodurch eine kompakte Ausgestaltung mit hoher Effizienz erreicht werden kann. Unter einem "zumindest teilweise runden Innenquerschnitt" soll insbesondere verstanden werden, dass eine den Strömungsleitkanal begrenzende Wandung zumindest teilweise in Form eines Kreissegments ausgeformt ist. Vorzugsweise ist der Innenquerschnitt zu zumindest 50 Prozent rund.

Bevorzugt weist die Windauslassöffnung eine größere Querschnittsfläche auf als die Windeinlassöffnung. Dadurch kann ein Druckunterschied zwischen dem Windeinlassbereich und dem Windauslassbereich vergrößert werden, wodurch die Strömungsgeschwindigkeit und damit die Effizienz weiter gesteigert werden kann.

Zudem wird vorgeschlagen, dass das Windkraftmodul eine Frontseite und eine Rückseite aufweist, die gleiche Breiten aufweisen. Dadurch ist eine Parallelanordnung der Windkraftmodule möglich, ohne dass Zwischenstücke eingesetzt werden müssen. Die Windeinlassbereiche der benachbart angeordneten Windkraftmodule und die Windauslassbereiche der benachbart angeordneten Windkraftmodule können einfach miteinander gekoppelt werden. Unter einer "Breite" soll in diesem Zusammenhang eine Abmessung des Gehäuses parallel zu der vertikalen Richtung verstanden werden. Vorzugsweise ist die Breite entlang einer gesamten Höhe konstant.

Außerdem wird vorgeschlagen, dass der Turbinenbereich in Verbindung mit dem Windeinlassbereich und/oder dem Windauslassbereich zur Erhöhung der Strömungsgeschwindigkeit nach dem Venturiprinzip vorgesehen ist. Dadurch kann eine besonders hohe Effizienz erreicht werden. Darunter, dass der "Turbinenbereich zur Erhöhung der Strömungsgeschwindigkeit nach dem Venturiprinzip vorgesehen ist", soll insbesondere verstanden werden, dass der Strömungsleitkanal entlang der Längserstreckungsrichtung Innenquerschnitte mit unterschiedlichen Querschnittsflächen aufweist, die eine Erhöhung der Strömungsgeschwindigkeit bewirken.

Weiter wird eine Windkraftanlage mit zumindest zwei erfindungsgemäßen Windkraftmodulen, die strömungstechnisch miteinander gekoppelt sind, vorgeschlagen. Die Windkraftanlage weist vorteilhafterweise zumindest ein weiteres Windkraftmodul auf, das strömungstechnisch mit den zumindest zwei Windkraftmodulen gekoppelt ist.

Außerdem wird ein Verfahren zur Anordnung von Windkraftmodulen in einer Windkraftanlage vorgeschlagen, nach dem die Windkraftmodule parallel zueinander angeordnet und strömungstechnisch miteinander gekoppelt werden. Vorzugsweise werden die Windkraftmodule an einer Kante von einem Bauwerk, insbesondere einem Gebäude, angeordnet.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisch ein Bauwerk mit einer Windkraftanlage,
- Fig. 2: ein Windkraftmodul der Windkraftanlage in einer perspektivischen Darstellung,
- Fig. 3: das Windkraftmodul in einer Ansicht von unten,
- Fig. 4: eine Seitenansicht des Windkraftmoduls,
- Fig. 5: einen Schnitt durch das Windkraftmodul,
- Fig. 6: eine Frontansicht des Windkraftmoduls,
- Fig. 7: eine Rückansicht des Windkraftmoduls und
- Fig. 8: eine Aufsicht auf das Windkraftmodul.

### Beschreibung der Ausführungsbeispiele

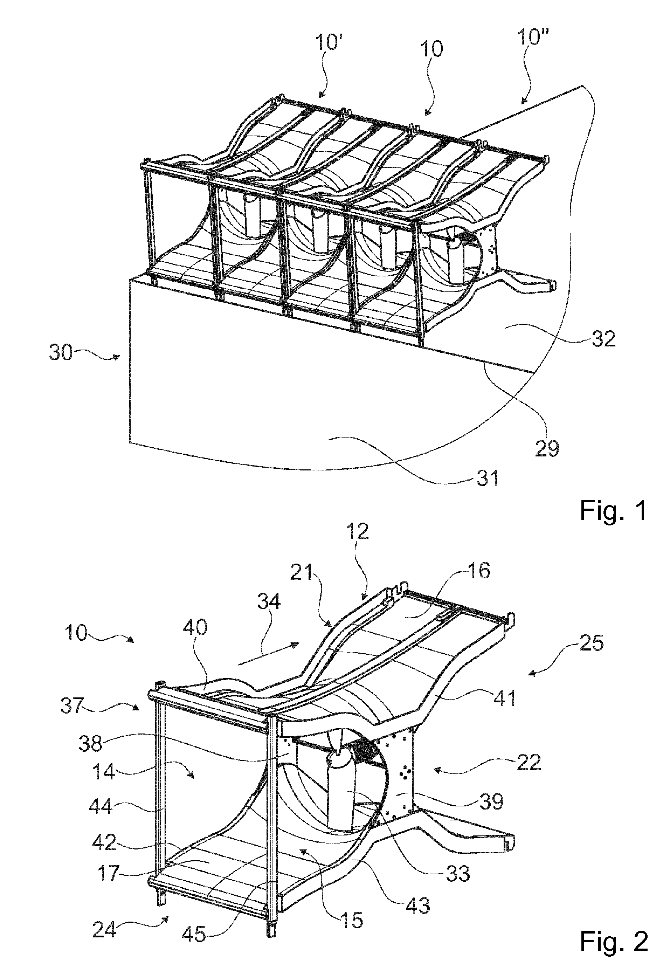

Figur 1 zeigt schematisch ein Bauwerk 30 mit einer an einer Kante 29 des Bauwerks 30 befestigten Windkraftanlage. Das Bauwerk 30, das in dem dargestellten Ausführungsbeispiel als ein Gebäude ausgebildet ist, weist eine im Wesentlichen in vertikaler Richtung verlaufende Gebäudefront 31 sowie eine im Wesentlichen horizontal verlaufende Dachfläche 32 auf. An der Kante 29 gehen die Gebäudefront 31 und die Dachfläche 32 ineinander über. Die Dachfläche 32 und die Gebäudefront 31 sind in einem rechten Winkel zueinander angeordnet. Die Windkraftanlage ist auf der Dachfläche 32 angeordnet.

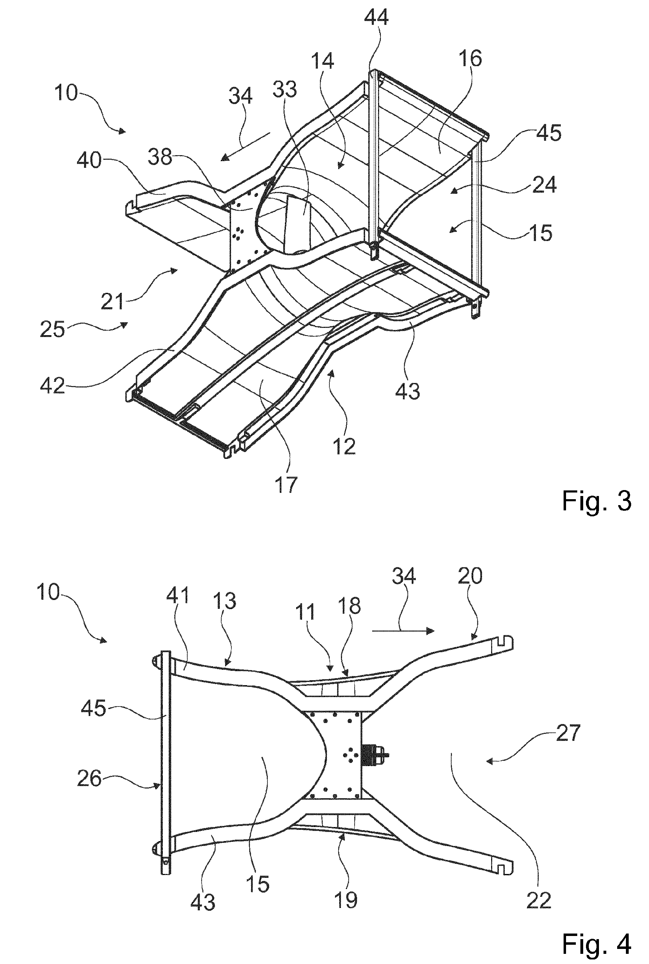

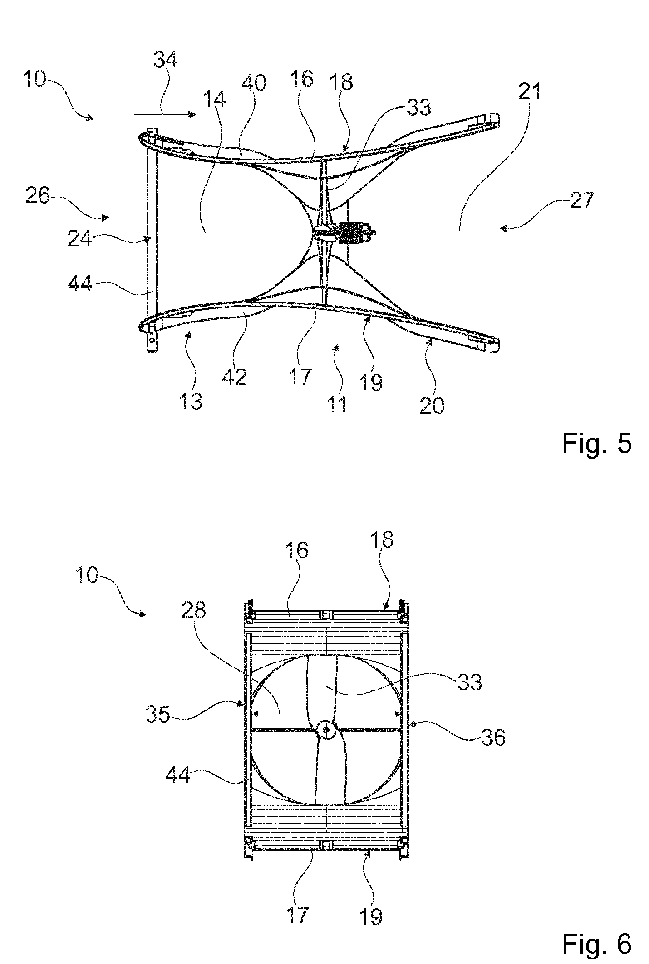

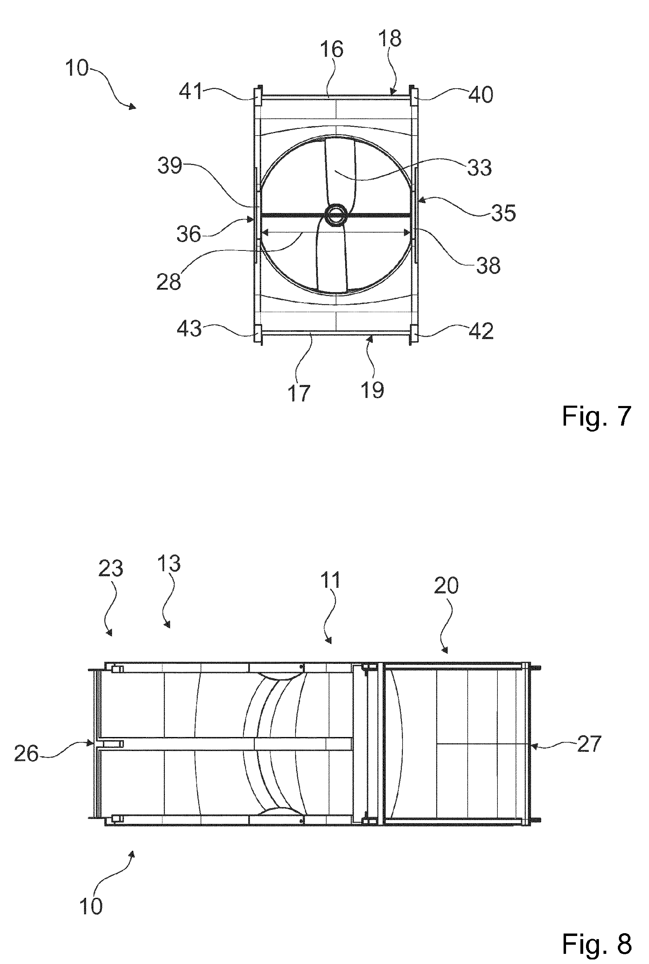

Die an der Kante 29 angeordnete Windkraftanlage ist dazu vorgesehen, einen Druckunterschied auszunutzen, der sich bei Wind und einer Anströmung der Gebäudefront 31 ausbildet. Die Windkraftanlage umfasst eine Mehrzahl von parallel zueinander angeordneten Windkraftmodulen 10, 10', 10", die entlang der Kante 29 angeordnet sind. Die dargestellten Windkraftmodule 10, 10', 10" sind alle analog zueinander ausgebildet. In den Figuren 2 bis 8 ist eines der Windkraftmodule 10, 10', 10" dargestellt. Die nachfolgende Beschreibung des Windkraftmoduls 10 ist äquivalent auf die restlichen Windkraftmodule 10', 10" übertragbar.

Das Windkraftmodul 10 umfasst einen Turbinenbereich 11, ein den Turbinenbereich 11 umschließendes Gehäuse 12 und ein Turbinenrad 33, das in dem Turbinenbereich 11 innerhalb des Gehäuses 12 angeordnet ist. Das Gehäuse 12 bildet einen sich in Richtung des Turbinenbereichs 11 verjüngenden Strömungsleitkanal aus, der dazu vorgesehen ist, eine Luftströmung an dem Turbinenrad 33 vorbei zu leiten. In dem Turbinenbereich 11 umschließt das Gehäuse 12 den Strömungsleitkanal vollständig. Das Turbinenrad 33 ist in dem Strömungsleitkanal angeordnet. Der Strömungsleitkanal weist in dem Turbinenbereich 11 einen weitgehend runden Innenquerschnitt auf.

Das Windkraftmodul 10 umfasst einen Windeinlassbereich 13, der strömungstechnisch dem Turbinenbereich 11 unmittelbar vorgeschaltet ist, und einen Windauslassbereich 20, der dem Turbinenbereich 11 unmittelbar nachgeschaltet ist. Der Strömungsleitkanal, der durch das Gehäuse 12 ausgebildet ist, ist in den Windeinlassbereich 13, den Turbinenbereich 11 und den Windauslassbereich 20 unterteilt. Eine sich in einer Umgebung um das Windkraftmodul 10 ausbildende Luftströmung, bei der die Frontseite 26 des Bauwerks 30 angeströmt wird, wird durch den Windeinlassbereich 13 zumindest teilweise eingefangen, in dem Turbinenbereich 11 an dem Turbinenrad 33 vorbeigeführt und über den Windauslassbereich 20 wieder in die Umgebung ausgeleitet. Das Windkraftmodul 10 weist eine Längserstreckungsrichtung 34 auf, entlang der der Windeinlassbereich 13, der Turbinenbereich 11 und der Windauslassbereich 20 hintereinander angeordnet sind. Das Turbinenrad 33 weist eine Rotationsachse auf, welche parallel zu einer mittleren Strömungsrichtung der Luftströmung in den Turbinenbereich 11 orientiert ist. In dem Turbinenbereich 11 weist der Strömungsleitkanal einen Innendurchmesser auf, der im Wesentlichen einem Durchmesser des Turbinenrads 33 entspricht. Indem der Strömungsleitkanal einen im Wesentlichen runden Innenquerschnitt aufweist, ist ein Spalt zwischen dem Gehäuse 12, das eine Wandung des Strömungsleitkanals ausbildet, und dem Turbinenrad 33 vernachlässigbar klein.

Der Windeinlassbereich 13 ist lediglich teilweise von dem Gehäuse 12 umschlossen. Der Windeinlassbereich 13 ist für eine strömungstechnische Kopplung mit den weiteren Windkraftmodulen 10', 10" vorgesehen. Über den Windeinlassbereich 13 sind die Strömungsleitkanäle der benachbart angeordneten Windkraftmodule 10, 10', 10" miteinander gekoppelt. Die Kopplung über den Windeinlassbereich 13 ist dazu vorgesehen, eine Anströmung der Windkraftmodule 10, 10', 10" insgesamt zu verbessern. Werden die Windkraftmodule 10, 10', 10" seitlich angeströmt, d.h. weist die Luftströmung in der Umgebung eine horizontale Strömungsrichtung auf, welche mit der Längserstreckungsrichtung 34 des Windkraftmoduls 10 einen Winkel ungleich Null Grad einschließt, bildet sich zwischen den Windkraftmodulen 10, 10', 10" eine Querströmung aus. Die Querströmung verringert bei seitlicher Anströmung der Windkraftmodule 10, 10', 10" eine Verwirbelung in dem Windeinlassbereich 13 des Windkraftmoduls 10. Zudem bewirkt die Querströmung einen Druckausgleich zwischen den benachbart angeordneten Windkraftmodulen 10.

Das Gehäuse 12 des Windkraftmoduls 10 weist in dem Windeinlassbereich 13 seitliche Winddurchlassöffnungen 14, 15 auf, die zur strömungstechnischen Kopplung mit den weiteren Windkraftmodulen 10', 10" vorgesehen sind. Die seitlichen Winddurchlassöffnungen 14, 15 sind für die Querströmung vorgesehen. Der Windeinlassbereich 13 des Windkraftmoduls 10 ist über die seitlichen Winddurchlassöffnungen 14, 15 mit den Windeinlassbereichen der zwei benachbart angeordneten Windkraftmodulen 10', 10" verbunden.

Das Windkraftmodul 10 weist eine Frontseite 26 und eine Rückseite 27, zwei Längsseiten 35, 36 sowie eine Oberseite 18 und eine Unterseite 19 auf. An der Frontseite 26 umfasst das Windkraftmodul 10 eine Windeinlassöffnung 24, durch die das Windkraftmodul 10 in Richtung der Umgebung geöffnet ist. An der Rückseite 27 umfasst das Windkraftmodul 10 eine Windauslassöffnung 25, durch die das Windkraftmodul 10 ebenfalls in Richtung der Umgebung geöffnet ist. Die seitlichen Winddurchlassöffnungen 14, 15 sind in die Längsseiten 35, 36 eingebracht. Bildet das Windkraftmodul 10 in der Windkraftanlage ein Abschlussmodul aus, welches lediglich benachbart zu einem weiteren Windkraftmodul 10" angeordnet ist, wird die seitliche Winddurchlassöffnung 14 in der dem benachbarten Windkraftmodul 10" abgewandten Längsseite 35 verschlossen.

Das Gehäuse 12 umfasst in dem dargestellten Ausführungsbeispiel einen Rahmen 37, der eine Grundform des Windkraftmoduls 10 definiert. Zur Begrenzung des Strömungsleitkanals weist das Gehäuse 12 mehrere Gehäuseteile 16, 17, 38, 39 auf. Die Gehäuseteile 16, 17, 38, 39 bilden eine Wandung des Strömungsleitkanals aus. Das erste Gehäuseteil 16 begrenzt den Strömungsleitkanal an der Oberseite 18. Das zweite Gehäuseteil 17 begrenzt den Strömungsleitkanal an der Unterseite 19. Die zwei weiteren Gehäuseteile 38, 39 begrenzen den Strömungsleitkanal an den Längsseiten 35, 36. Die Gehäuseteile 16, 17, 38, 39 sind in Form von Blechteilen ausgebildet. Eine Anzahl der Gehäuseteile 16, 17, 38, 39 kann, je nach Form und Größe der Gehäuseteile 16, 17, 38, 39 und/oder des Strömungsleitkanals, auch von dem dargestellten Ausführungsbeispiel mit den vier Gehäuseteilen 16, 17, 38, 39 abweichen. Zur Befestigung der Gehäuseteile 16, 17, 38, 39 weist das dargestellte Windkraftmodul 10 einen Rahmen 37 auf. Auf den Rahmen 37 kann grundsätzlich auch zumindest teilweise verzichtet werden, wenn die Gehäuseteile 16, 17, 38, 39 zumindest teilweise selbsttragend ausgeführt sind.

Das erste Gehäuseteil 16, das einen Deckel des Strömungsleitkanals ausbildet, begrenzt den Windeinlassbereich 13 an der Oberseite 18. Das zweite Gehäuseteil 17, das einen Boden des Strömungsleitkanals ausbildet, begrenzt den Windeinlassbereich 13 an der Unterseite 19. An den Längsseiten 35, 36 ist der Windeinlassbereich 13 geöffnet. Der Windeinlassbereich 13 ist definiert durch die seitlichen Winddurchlassöffnungen 14, 15. Der Windeinlassbereich 13 beginnt an der Frontseite 26 und weist entlang der Längserstreckungsrichtung 34 eine Länge auf, die einer Abmessung der seitlichen Winddurchlassöffnungen 14, 15 entlang der Längserstreckungsrichtung 34 entspricht.

Die Längsseiten 35, 36 des Windkraftmoduls 10 sind spiegelbildlich zueinander ausgebildet. Insbesondere die zwei seitlichen Winddurchlassöffnungen 14, 15 sind, bezogen auf eine vertikale Richtung senkrecht zu der Längserstreckungsrichtung 34, fluchtend zueinander angeordnet. Die Winddurchlassöffnung 14, 15 benachbart angeordneter Windkraftmodule 10, 10', 10", welche in die bei entsprechender Anordnung einander zugewandten Längsseiten 35, 36 der Windkraftmodule 10, 10', 10" eingebracht sind, liegen sich einander deckungsgleich gegenüber. Indem gleichzeitig die Gehäuse 12 der benachbart angeordneten Windkraftmodule 10, 10', 10" einander berühren, sind die Windkraftmodule 10, 10', 10" über die seitlichen Winddurchlassöffnungen 14, 15 strömungstechnisch miteinander gekoppelt. Die seitlichen Winddurchlassöffnungen 14, 15 sind dabei lediglich für die Kopplung der Windkraftmodule 10, 10', 10" vorgesehen. Ist die Windkraftanlage vollständig montiert, ist der Windeinlassbereich 13 über die seitlichen Winddurchlassöffnungen 14, 15 nicht in Richtung der Umgebung geöffnet.

Das Windkraftmodul 10 umfasst einen Windauslassbereich 20, in dem das Gehäuse 12 ebenfalls für eine strömungstechnische Kopplung mit den weiteren, parallel angeordneten Windkraftmodulen 10', 10" vorgesehen ist. Die Gehäuseteile 16, 17, die den Strömungsleitkanal in dem Windeinlassbereich 13 an der Oberseite 18 und der Unterseite 19 begrenzen, begrenzen den Strömungsleitkanal auch in dem Windauslassbereich 20 an der Oberseite 18 und der Unterseite 19. In dem Windauslassbereich 20 weist das Gehäuse 12 analog zum Windeinlassbereich 13 zwei seitliche Winddurchlassöffnungen 21, 22 auf, die zur Kopplung mit dem den weiteren Windkraftmodulen 10, 10" vorgesehen sind. Die seitlichen Winddurchlassöffnungen 14, 15 des Windeinlassbereichs 13 und die seitlichen Winddurchlassöffnungen 21, 22 des Windauslassbereichs 20 sind analog zueinander ausgebildet.

Das erste Gehäuseteil 16 und das zweite Gehäuseteil 17, die den Strömungsleitkanal an der Oberseite 18 und an der Unterseite 19 begrenzen, sind beabstandet zueinander angeordnet. Die Gehäuseteile 16, 17 weisen parallel zu der Längserstreckungsrichtung 34 verlaufende Mitten auf, auf die bezogen die Gehäuseteile 16, 17 symmetrisch ausgeführt sind. Die Mitten der Gehäuseteile 16, 17 sind durch eine Ebene definiert, die mittig zwischen den beiden Längsseiten 35, 36 liegt. In vertikaler Richtung weisen die Mitten der Gehäuseteile 16, 17 einen Abstand auf, der entlang der Längserstreckungsrichtung 34 ausgehend von der Frontseite 26 in Richtung des Turbinenbereichs 11 zunächst abnimmt.

In horizontaler Richtung sind die Gehäuseteile 16, 17 teilweise gekrümmt ausgebildet. Bezogen auf den Strömungsleitkanal, der von den Gehäuseteilen 16, 17 begrenzt wird, sind die Gehäuseteile 16, 17 konkav gekrümmt. Die Gehäuseteile 16, 17 weisen eine Krümmung auf, die entlang der Längserstreckungsrichtung 34 sukzessive zunimmt. An der Frontseite 26 beträgt die Krümmung nahezu Null. Ausgehend von der Frontseite 26 nimmt die Krümmung in Richtung des Turbinenbereichs 11 zu und ist in dem Turbinenbereich 11 maximal. Der sich verjüngende Querschnitt des Strömungsteilkanals ist durch den abnehmenden Abstand und die zunehmende Krümmung ausgebildet.

Die zwei weiteren Gehäuseteile 38, 39, die den Strömungsleitkanal an den Längsseiten 35, 36 begrenzen, definieren den Turbinenbereich 11. Die zwei weiteren Gehäuseteile 38, 39 bilden Seitenwände für den Strömungsleitkanal aus. Durch die vier Gehäuseteile 16, 17, 38, 39 ist der Strömungsleitkanal in dem Turbinenbereich 11 auf allen Seiten begrenzt. Der Innenquerschnitt des Strömungsleitkanals ist in Bereichen, in denen er von dem ersten Gehäuseteil 16 und dem zweiten Gehäuseteil 17 begrenzt ist, rund. Die zwei weiteren Gehäuseteile 38 ,39 sind in Form flacher Bleche ausgebildet.

In dem an den Turbinenbereich 11 anschließenden Windauslassbereich 20 ist das Gehäuse 12 wieder für eine strömungstechnische Kopplung mit den parallel angeordneten Windkraftmodulen 10', 10" vorgesehen. Der Windauslassbereich 20 ist ähnlich dem Windeinlassbereich 13 ausgebildet. Das erste Gehäuseteil 16 und das zweite Gehäuseteile 17 begrenzen den Strömungsleitkanal in dem Windauslassbereich 20 an der Oberseite 18 und an der Unterseite 19. An den Längsseiten 35, 36 ist das Gehäuse 12 in dem Windauslassbereich 20 offen. Das Gehäuse 12 weist in dem Windauslassbereich 20 zwei seitliche Winddurchlassöffnungen 21, 22 auf, die zur Kopplung mit den weiteren Windkraftmodulen 10', 10" vorgesehen sind. Die seitlichen Winddurchlassöffnungen 21, 22 des Windauslassbereichs 20 sind analog den seitlichen Winddurchlassöffnungen 14, 15 des Windeinlassbereichs 13 ausgebildet.

Der Rahmen 37 des Gehäuses 12, auf den grundsätzlich auch verzichtet werden kann, weist in dem dargestellten Ausführungsbeispiel vier Längsstreben 40, 41, 42, 43 auf, welche Kanten des Gehäuses 12 ausbilden. Das erste Gehäuseteil 16 ist an den zwei oberen Längsstreben 40, 41 befestigt. Das zweite Gehäuseteil 17 ist an den zwei unteren Längsstreben 42, 43 befestigt. Die seitlichen Gehäuseteile 38, 39 sind jeweils an einer der oberen Längsstreben 40, 41 und an einer der unteren Längsstreben 42, 43 befestigt. Die vier Längsstreben 40, 41, 42, 43 begrenzen die Winddurchlassöffnungen 14, 15, 21, 22 in vertikaler Richtung. In einer Aufsicht sind die Längsstreben 40, 41, 42, 43 gerade ausgebildet. Über die Längsstreben 40, 41, 42, 43 sind die benachbart angeordneten Windkraftmodule 10, 10', 10" miteinander verbindbar. In einer Seitenansicht weisen die Längsstreben 40, 41, 42, 43 einen gebogenen und/oder angewinkelten Verlauf auf, der für den sich verjüngenden Strömungsleitkanal vorgesehen ist. Die beiden oberen Längsstreben 40, 41 und die beiden unteren Längsstreben 42, 43 weisen in horizontaler Richtung entlang Längserstreckungsrichtung 34 einen konstanten Abstand auf. In vertikaler Richtung variiert ein Abstand der Längsstreben 40, 41, 42, 43 entlang der Längserstreckungsrichtung 34. In dem Turbinenbereich 11 ist der vertikale Abstand am geringsten. In dem Windeinlassbereich 13 und in dem Windauslassbereich 20 ist der vertikale Abstand der Längsstreben 40, 41, 42, 43 größer als in dem Turbinenbereich 11. Weiter weist der Rahmen 37 zwei Eckstreben 44, 45 auf, welche die oberen Längsstreben 40, 41 und die unteren Längsstreben 42, 43 miteinander verbinden. Die Eckstreben 44, 45, verlaufen in vertikaler Richtung. Die seitlichen Winddurchlassöffnungen 14, 15 des Windeinlassbereichs 13 sind durch die vorderen Eckstreben 44, 45, die Längsstreben 40, 41, 42, 43 und die seitlichen Gehäuseteile 38, 39 begrenzt. Auf die hinteren Eckstreben wird in dem dargestellten Ausführungsbeispiel verzichtet. Die seitlichen Winddurchlassöffnungen 21, 22 des Windauslassbereichs 20 sind durch die Längsstreben 40, 41, 42, 43 und die seitlichen Gehäuseteile 38, 39 begrenzt. Die vordere Windeinlassöffnung 24 ist durch die vorderen Eckstreben 44, 45, das erste Gehäuseteil 16 und das zweite Gehäuseteil 17 begrenzt. Die hintere Windauslassöffnung 25 ist durch das erste Gehäuseteil 16 und das zweite Gehäuseteil 17 begrenzt. Auf die Eckstreben 44, 45 kann, sofern das Gehäuse 12 eine entsprechende Tragfähigkeit aufweist, grundsätzlich auch verzichtet werden. Grundsätzlich können auch weitere Streben vorgesehen werden, um das Gehäuse 12 entsprechend zu verstärken, insbesondere wenn die Gehäuseteile 16, 17, 38, 39 aus einem nichttragenden Material wie beispielsweise einem Textilgewebe ausgeführt sind. Sind die Gehäuseteile 16, 17, 38, 39 selbsttragend ausgeführt, kann eine Funktion der Längsstreben 40, 41, 42, 43 und/oder der Eckstreben 44, 45 in die Gehäuseteile 16, 17, 38, 39 integriert sein.

Das Windkraftmodul 10 weist eine zumindest im Wesentlichen rechteckige Grundfläche 23 auf, die für die Parallelanordnung mit den weiteren Windkraftmodulen 10', 10" vorgesehen ist. Durch die rechteckige Grundfläche 23 sind die Windkraftmodule 10, 10', 10" dazu vorgesehen, nebeneinander angeordnet zu werden, ohne dass ein Zwischenraum zwischen den Windkraftmodulen 10, 10', 10" verbleit. Die eckige Grundfläche 23 ist insbesondere durch eine Anordnung der Längsstreben 40, 41, 42, 43 definiert.

Der Windauslassbereich 20 ist in Verbindung mit dem Windeinlassbereich 13 und dem Turbinenbereich 11 zur Erhöhung der Strömungsgeschwindigkeit nach dem Venturiprinzip vorgesehen. In dem Turbinenbereich 11 weist der Strömungsleitkanal einen minimalen Querschnitt auf. Die Windeinlassöffnung 24 weist eine größere Querschnittsfläche auf als die Windauslassöffnung 25. Die vordere Windeinlassöffnung 24 weist eine rechteckige Grundform auf. Die hintere Windeinlassöffnung 24 weist ebenfalls eine rechteckige Grundform auf. In dem Turbinenbereich 11 weist der Strömungsleitkanal den zumindest teilweise runden Innenquerschnitt auf. Entlang der Längserstreckungsrichtung 34 ändert sich damit der Innenquerschnitt des Strömungsleitkanals von eckig zu rund und wieder zu eckig. Die Windeinlassöffnung 24 des Windeinlassbereichs 13 und die Windauslassöffnung 25 des Windauslassbereichs 20 weisen gleiche Breiten 28 auf. Gleichzeitig weist die Windeinlassöffnung 24 eine geringere Höhe auf als die Windauslassöffnung 25. Die unterschiedlichen Querschnittflächen bewirken eine zusätzliche Druckdifferenz zwischen dem Windeinlassbereich 13 und dem Windauslassbereich 20, welche die Luftströmung durch den Turbinenbereich 11 verstärkt. Dadurch stellt sich in dem Turbinenbereich 11 eine Strömungsgeschwindigkeit ein, die größer ist als eine Strömungsgeschwindigkeit in der Umgebung. Die Luftströmung treibt wiederrum das Turbinenrad 33 an. Das Turbinenrad 33 umfasst einen nicht näher dargestellten Generator, der eine von dem Luftstrom abhängige elektrische Leistung bereitstellt.

Die Windkraftanlage umfasst ein für das Windkraftmodul 10 vorgesehenes Gestell, welches einen Verstellmechanismus aufweist. Durch das Gestell ist das Windkraftmodul 10 dazu vorgesehen, von der Kante 29 wegbewegt zu werden. Der Verstellmechanismus ist dazu vorgesehen, für Wartungszwecke manuell durch einen Bediener von der Kante 29 wegbewegt zu werden. Zudem ist das Windkraftmodul 10 dazu vorgesehen, sich mittels des Verstellmechanismus selbstständig von der Kante 29 wegzubewegen, wenn eine die Luftströmung auf das Windkraftmodul 10 eine Windlast ausübt, die größer ist als eine durch den Verstellmechanismus definierte Höchstbelastung. Herrscht in der Umgebung eine Windgeschwindigkeit, die größer ist als ein Grenzwert, bewegt sich das Windkraftmodul 10 von der Kante 29 weg. Dadurch bewegt sich das Windkraftmodul 10 in einen durch die Kante 29 bedingten Windschatten, wodurch sich die an dem Windkraftmodul 10 angreifende Windlast verringert.

## Patentansprüche

1. Windkraftmodul (10) mit einem Turbinenbereich (11) und mit einem den Turbinenbereich (11) umschließenden Gehäuse (12), das einen sich in Richtung des Turbinenbereichs (11) verjüngenden Strömungsleitungskanal ausbildet,
**gekennzeichnet durch**
einen Windeinlassbereich (13), in dem das Gehäuse (12) für eine strömungstechnische Kopplung mit zumindest einem weiteren Windkraftmodul (10', 10") vorgesehen ist.

2. Windkraftmodul (10) nach Anspruch 1,
**dadurch gekennzeichnet, dass**
das Gehäuse (12) in dem Windeinlassbereich (13) zumindest eine seitliche Winddurchlassöffnung (14, 15) aufweist, die zur strömungstechnischen Kopplung mit dem zumindest einen weiteren Windkraftmodul (10') vorgesehen ist.

3. Windkraftmodul (10) nach Anspruch 1 oder 2,
**dadurch gekennzeichnet, dass**
das Gehäuse (12) zumindest ein Gehäuseteil (16, 17) aufweist, das den Windeinlassbereich (13) an einer Oberseite (18) und/oder einer Unterseite (19) begrenzt.

4. Windkraftmodul (10) nach einem der vorhergehenden Ansprüche,
**gekennzeichnet durch**
einen Windauslassbereich (20), in dem das Gehäuse (12) für eine strömungstechnische Kopplung mit dem zumindest einen weiteren, parallel angeordneten Windkraftmodul (10', 10") vorgesehen ist.

5. Windkraftmodul (10) nach Anspruch 4,
**dadurch gekennzeichnet, dass**
das Gehäuse (12) in dem Windauslassbereich (20) zumindest eine seitliche Winddurchlassöffnung (21, 22) aufweist, die zur Kopplung mit dem zumindest einen weiteren Windkraftmodul (10) vorgesehen ist.

6. Windkraftmodul (10) nach einem der vorhergehenden Ansprüche,
**gekennzeichnet durch**
eine zumindest im Wesentlichen rechteckige Grundfläche (23), die für eine Parallelanordnung mit dem zumindest einen weiteren Windkraftmodul (10', 10") vorgesehen ist.

7. Windkraftmodul (10) nach einem der vorhergehenden Ansprüche,
**gekennzeichnet durch**
eine vordere Windeinlassöffnung (24), die eine rechteckige Grundform aufweist, und eine hintere Windauslassöffnung (25), die eine rechteckige Grundform aufweist.

8. Windkraftmodul (10) nach einem der vorhergehenden Ansprüche,
**dadurch gekennzeichnet, dass**
der Strömungsleitkanal in dem Turbinenbereich (11) einen zumindest teilweise runden Innenquerschnitt aufweist.

9. Windkraftmodul (10) nach Anspruch 8,
**dadurch gekennzeichnet, dass**
die Windauslassöffnung (25) eine größere Querschnittsfläche aufweist als die Windeinlassöffnung (24).

10. Windkraftmodul (10) nach einem der vorhergehenden Ansprüche,
**gekennzeichnet durch**
eine Frontseite (26) und eine Rückseite (27), die die gleichen Breiten (28) aufweisen.

11. Windkraftmodul (10) zumindest nach Anspruch 4 oder 5,
**dadurch gekennzeichnet, dass**
der Turbinenbereich (11) in Verbindung mit dem Windeinlassbereich (13) und/oder dem Windauslassbereich (20) zur Erhöhung der Strömungsgeschwindigkeit nach dem Venturiprinzip vorgesehen ist.

12. Windkraftanlage mit zumindest zwei Windkraftmodulen (10, 10', 10") nach einem der vorhergehenden Ansprüche, die strömungstechnisch miteinander gekoppelt sind.

13. Windkraftanlage nach Anspruch 12,
**gekennzeichnet durch**
zumindest ein weiteres Windkraftmodul (10"), das strömungstechnisch mit den zumindest zwei Windkraftmodulen (10, 10') gekoppelt ist.

14. Verfahren zur Anordnung von Windkraftmodulen (10, 10', 10") in einer Windkraftanlage, insbesondere in einer Windkraftanlage nach Anspruch 12 oder 13,
**dadurch gekennzeichnet, dass**
die Windkraftmodule (10, 10', 10") parallel zueinander angeordnet und strömungstechnisch miteinander gekoppelt werden.

15. Verfahren nach Anspruch 14,
**dadurch gekennzeichnet, dass**
die Windkraftmodule (10, 10', 10") an einer Kante (29) von einem Bauwerk (30), insbesondere einem Gebäude, angeordnet werden.
